(19) Europäisches Patentamt
European Patent Office
Office européen des brevets

(11) Publication number: 0 199 663 B1

(12) # EUROPEAN PATENT SPECIFICATION

(45) Date of publication of patent specification: 09.08.89

(51) Int. Cl.[4]: C 09 D 5/44, C 08 G 18/60, C 08 G 18/64

(21) Application number: 86630022.1

(22) Date of filing: 13.02.86

(54) **Method of electrodepositing cationic resin compositions without the need for volatile organic coalescent solvents.**

(30) Priority: 19.04.85 US 725174

(43) Date of publication of application: 29.10.86 Bulletin 86/44

(45) Publication of the grant of the patent: 09.08.89 Bulletin 89/32

(84) Designated contracting states: BE DE FR GB IT NL SE

(56) References cited:
EP-A- 0 074 634
US-A- 4 182 831

(73) Proprietor: BASF Corporation
1255 Broad Street
Clifton New Jersey 07015 (US)

(72) Inventor: Debroy, Tapan K.
25691 Strathhaven Drive
Novi, MI 48052 (US)
Inventor: Chung, Ding-Yu
28228 Gettysburg Road
Farmington Hills, MI 48018 (US)
Inventor: Wold, Gerald G.
3206 Old Orchard Road
Brighton, MI 48116 (US)

(74) Representative: Schmitz, Jean-Marie et al
OFFICE DENNEMEYER S.à.r.l. P.O. Box 1502
L-1015 Luxembourg (LU)

EP 0 199 663 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

## Description

The present invention concerns a method of coating articles according to the preamble of the claim 1.

Cathodic electrodepositable resin compositions are well known in the art. Similarly, aqueous electrodeposition baths and processes for coating objects in aqueous electrodeposition baths containing cathodic electrodepositable resin compositions are well known in the art. The cathodic electrodepositable resin compositions conventionally used are epoxy/amine adducts mixed with a crosslinking agent and salted with an acid to form an aqueous principal emulsion. The aqueous principal emulsion is typically mixed at the coating site with a pigment paste, water, coalescent solvents, and other additives known in the art to form an aqueous electrodeposition bath. The bath is usually contained in an electrically insulated tank containing an anode. The object to be coated typically comprises an electrically conductive material. The object is usually connected to a direct current circuit to act as a cathode. When the object is immersed in the tank, flow of electricity across the object causes the resin and crosslinking emulsion as well as the pigment paste to be deposited on the surface of the object.

As previously mentioned, cathodic electrodepositable amine-containing epoxy resin compositions are well known in the art, similarly, processes for the deposition of these resins and aqueous electrodeposition baths are similarly well known in the art. These resins, baths, and processes are disclosed in US-A-3 984 299, 3 468 779, 4 116 900, 4 093 594, 4 137 140, 4 104 147, 4 225 478, 4 419 467, and 4 432 850, the disclosures of which are incorporated by reference.

It is known in the art that it is necessary to include coalescent solvents in a cathodic electrodeposition coating bath. Without these coalescent solvents, the films which are produced are not smooth. It is critical to have smooth coatings since any imperfections in the electrocoat will show up when a topcoat is applied. The coalescent solvents typically used are those conventional in this art such as ethylene glycol monohexyl ether, propylene glycol monophenyl ether, ethylene glycol monoethyl ether, diethyleneglycol monobutyl ether, ethanol, isopropanol, etc. The coalescent solvents are typically present in the principal emulsion supplied to the user in a concentration of about 1.0 wt.% to about 3.0 wt.% of the weight of the principal emulsion at approximately 36 % solids. The coalescent solvents are typically present in the coating bath in the range of about 1.0 wt.% to about 2.0 wt.% of the total bath. It is typically necessary during the operation of the coating bath for the operator to increase the volatile organic content of the coating bath by adding additional coalescent solvant to produce an electrocoat which is smooth. In addition to the coalescent solvents having an effect on the smoothness of the deposited film, it is also known that in order to get high build films, that is, films with a thickness of 25.4 to 35.5 µm (1.0 to 1.4 mils), coalescent solvents are required.

The EP-A-189 728 describes a cathodic electrodepositable resin composition comprising an amine-containing epoxy resin and an oxime-blocked polyisocyanate cross-linking agent, said oxime being the reaction product of an aliphatic carbonyl-containing compound having at least 4 carbon atoms and hydroxylamine.

There is a constant search in the coatings industry for low VOC (volatile organic content) coatings. This is particularly true in high volume, high use production operations such as automobile manufacturing. It is desirable to eliminate the VOC of coatings such as electrodeposited cationic coatings in order to meet government emission regulations and protect the safety and health of the workers.

Accordingly, what is needed in this art is an electrodeposition bath and a method of cationic electrodeposition in which the use of coalescent solvents in a cathodic electrodeposition bath is substantially reduced or eliminated.

The method according to the present invention is characterized as indicated in the characterizing portion of claim.

It has now been found, surprisingly and unexpectedly, that by incorporating certain crosslinking agents into the principal electrodepositable resin emulsion, smooth high film-build cathodic electrodeposited coatings can be produced without using coalescent solvents in the electrodeposition bath. A method of coating articles with a film-forming resin using a cathodic electrodeposition process is disclosed wherein a cathodic electrodepositable amine-containing epoxide resin is mixed with a crosslinking agent, salted with an acid to form an aqueous principal emulsion, the emulsion is mixed with a pigment paste and water to form an aqueous coating bath, the bath is contained in an electrically insulated tank containing an anode, an electrically conductive article is connected to a D.C. circuit to act as a cathode, the article is immersed in the bath and a current is passed across the article resulting the deposition of a film of the resin and crosslinking agent and pigment paste on the surfaces of the article, and then the article is removed from the bath and the coating is cured, the improvement comprising using as the crosslinking agent a blocked polyisocyanate crosslinking agent comprising the reaction product of a polyetherpolyol, a multifunctional isocyanate, and a blocking agent, thereby producing smooth, flexible high build films and substantially reducing or eliminating the need for organic coalescent solvents.

A coated article manufactured by the above-mentioned method and an improved aqueous cathodic electrodeposition coating bath are obtained, wherein the coating bath comprises an acid salted amine-containing epoxide resin, a crosslinking agent, pigment paste, and water. The improvement comprises

the use of a crosslinking agent comprising the reaction product of polyetherpolyol, a multifonctional isocyanate, and a blocking agent, thereby producing smooth, flexible, high build electrodeposited films and substantially eliminating or reducing the need for organic coalescent solvents.

The use of the crosslinking agents of the present invention surprisingly and unexpectedly results in the elimination of previously required organic coalescent solvents in the coating bath. It is surprising and unexpected that the coating bath and method of the present invention will produce coated articles having smooth, high build; flexible films without using volatile organic coalescent solvents.

The foregoing, and other features and advantages of the present invention will become more apparent from the following description.

The blocked polyisocyanate crosslinking agents of the present invention are made by reacting a multifunctional isocyanate (i. e., polyisocyanate) with a polyetherpolyol. The polyetherpolyol/polyisocyanate adduct is then reacted with a blocking agent to form a blocked crosslinking agent.

The polyisocyanates useful in the practice of this invention include multifonctional organic polyisocyanates typical of those used in the art, e. g., US-A-4 182 831, the disclosure of which is incorporated by reference.

More specifically, the isocyanates which can be used in the practice of this invention include toluene diisocyanate, 4,4′-diphenylmethane diisocyanate, hexamethylene diisocyanate and isophorone diisocyanate.

Particularly preferred polyisocyanates include toluene diisocyanate, isophorone diisocyanate.

The polyether polyols are alkylene oxide condensates of glycols such as ethylene glycol, and propylene glycol, as well as other polyols such as glycerol, trimethylol propane, hexane triol, pentareythrital, and the like, as well as monoethers such as diethylene glycol and the like. Among the alkylene oxides that may be condensed with these polyols to form polyethers are ethylene oxide, propylene oxide, butylene oxide, styrene oxide and the like. These are generally called hydroxyl-terminated polyethers and can be linear or branched. Especially useful polyether polyols are those derived from reacting polyols such as ethylene glycol, diethylene glycol, triethylene glycol, 1,4-butylene glycol, 1,3-butylene glycol, 1,6-hexanediol, and their mixtures ; glycerol, trimethylolethane, trimethylolpropane, 1,2,6-hexanetriol, pentaerythritol, dipentaerythritol, tripentaerythritol, polypentaerythritol, sorbitol, methyl glucosides, sucrose and the like with alkylene oxides such as ethylene oxide, propylene oxide, their mixtures, and the like.

Particularly preferred polyether polyols include multifunctional ethoxylated or propoxylated alcohols such as Pluracol TP440‴ manufactured by BASF Wyandotte Corp., Parsippany, NJ, and Polyol TP30‴ and Polyol TS30‴ manufactured by Perstorp Co. located in Perstorp, Sweden.

The polyetherpolyol/polyisocyanate crosslinking agents are made by reacting sufficient amounts of polyether polyol with sufficient amounts of polyisocyanate and solvents in a conventional reactor for a sufficient amount of time at a sufficient temperature to completely react the components. Typically, about 1.5 equivalents to about 0.8 equivalent of polyetherpolyol is charged to a conventional reactor, preferably about 1.0 equivalent. Preferably, about 2.0 equivalents of polyisocyanate is reacted. The reaction is typically run at about 25 °C to about 55 °C, more typically about 27 °C to about 50 °C, preferably about 48 °C for typically about 1 to about 8 hours, more typically about 2 hours to about 4 hours, preferably about 3 hours.

The blocking agents which can be used to block the polyetherpolyol polyisocyanate adducts are those known in the art.

Any suitable aliphatic, cycloaliphatic, aromatic, alkyl monolcohol and phenolic compound can be used as a blocking agent in the practice of the present invention, such as lower aliphatic alcohols, such as methyl, ethyl, chloroethyl, propyl, butyl, amyl, hexyl, heptyl, octyl, nonyl, 3,3,5-trimethylhexanol, decyl and lauryl alcohols, and the like ; the phenolic compounds such as phenol itself, substituted phenols in which the substituents do not adversely affect the coating operations. Examples include cresol, nitrophenol, chlorophenol and t-butyl phenol.

A preferred blocking agent is monopropyl ether of ethylene glycol. Additional blocking agents include tertiary hydroxyl amines, such as diethylethanolamine and oximes, such as methylethyl ketoxime, acetone oxime and cyclohexanone oxime, and caprolactam. A preferred oxime is methyl-n-amyl ketoxime.

The blocked polyisocyanate crosslinking agents of this invention are formed by reacting sufficient quantities of blocking agent with sufficient quantities of the polyetherpolyol/polyisocyanate adduct under reaction conditions conventional in this art such that no free isocyanate groups are present when the reaction has run its course. Typically about one equivalent of polyisocyanate/polyetherpolyol adduct is charged into a conventional reactor vessel. Typically about 0.8 mole to about 1.2 moles of blocking agent are reacted, preferably about 1.0 moles. In addition one or more of the following compositions is charged : methyl isobutyl ketone, butanol, methyl ethyl ketone, toluol, or an equivalent organic solvent.

The reaction temperature varies with the type of blocking agent and polyisocyanate/polyetherpolyol adduct used, for example, when reacting toluene disocyanate-trimethanol propane with a ketoxime, the reaction is typically carried out at 66 °C to 104 °C (150 °F to 220 °F), more typically 71 °C (160 °F) to 99 °C (210 °F), and preferably 82 °C (180 °F) to 93 °C (200 °F). The reactor charge is mixed for 15 minutes to 120 minutes, more typically 20 minutes to 40 minutes, and preferably 25 minutes to

35 minutes. The blocked crosslinking agent is left in solution after the reaction is complete.

The epoxides useful in the practice of this invention are the polyepoxides typically used in this art and comprise a resinous material containing at least one epoxy group per molecule.

A particularly useful class of polyepoxides are the glycidyl polyethers of polyhydric phenols.

Such polyepoxide resins are derived from an epihalohydrin and a dihydric phenol and have an epoxide equivalent weight of about 400 to about 4 000. Examples of epihalohydrins are epichlorohydrin, epibromohydrin and epiiodohydrin with epichlorohydrin being preferred. Dihydric phenols are exemplified by resorcinol, hydroquinone, p,p'-dihydroxydiphenylpropane (or Bisphenol A as it is commonly called), p,p'-dihydroxybenzophenone, p,p'-dihydroxydiphenyl, p,p'-dihydroxydiphenyl ethane, bis (2-hydroxynaphthy) methane, 1,5-dihydroxynaphthylene and the like with Bisphenol A being preferred. These polyepoxide resins are well known in the art and are made in desired molecular weights by reacting the epihalohydrin and the dihydric phenol in various ratios or by reacting a dihydric phenol with a lower molecular weight polyepoxide resin. Particularly preferred polyepoxide resins are glycidyl polyethers of Bisphenol A having epoxide equivalent weights of about 450 to about 2 000, more typically about 800 to about 1 600 and preferably about 800 to about 1 500.

The polyepoxides used in the practice of this invention will have a relatively high molecular weight, that is, the molecular weight will typically be about 900 to about 4 000, more typically about 1 600 to about 3 200, and preferably about 1 600 to about 2 800.

Another quite useful class of polyepoxides are produced similarly from novolak resins or similar polyphenol resins.

Also suitable are the polyepoxides comprising similar polyglycidyl ethers of polyhydric alcohols which may be derived from such polyhydric alcohols as ethylene glycol, diethylene glycol, triethylene glycol, 1,2-propylene glycol, 1,4-propylene glycol, 1,5-pentanediol, 1,2,6-hexanetriol, glycerol, bis (4-hydroxycyclohexyl) 2,2-propane and the like. There can also be used polyglycidyl esters of polycarboxylic acids, which are produced by the reaction of epichlorohydrin or similar epoxy compounds with an aliphatic or aromatic polycarboxylic acid such as oxalic acid, succinic acid, glutaric acid terephthalic acid, 2,6-naphthylane dicarboxylic acid, dimerized linolenic acid and the like. Examples are glycidyl adipate and glycidyl phthalate. Also useful are polyepoxides derived from the epoxidation of an olefinically unsaturated alicyclic compound. Included are diepoxides comprising in part one or more monoepoxides. These polyepoxides are nonphenolic and are obtained by the epoxidation of alicyclic olefins. For example, by oxygen and selected method catalysts, by perbenzoic acids, by acetaldehyde monoperacetate, or by peracetic acid. Among such polyepoxides are the epoxy alicyclic ethers and esters which are well known in the art.

Other epoxy-containing compounds and resins include nitrogeneous diepoxides such as disclosed in US-A-3 365 471 ; epoxy resins from 1,1-methylene bis (5-substituted hydantoin), US-A-3 391 097 ; bis-imide containing diepoxides, US-A-3 450 711 ; epoxylated ammomethyldiphenyl oxides, US-A-3 312 664 ; heterocyclic N,N'-diglycidyl compounds, US-A-3 503 979 ; amino epoxy phosphonates, GB-A-1 172 916 ; 1,3,5-triglycidyl isocyanurates, as well as other epoxy-containing materials known in the art.

Although the blocked crosslinking agents of the present invention can be used successfully with conventional amine-containing epoxy resins known in the cathodic electrodeposition art, it is preferable to use modified epoxy resins. Specifically, the modified epoxy resins used in the practice of this invention will comprise one of the aforementioned epoxy resin compositions optionally chain extended with a water miscible or water soluble polyol, reacted with excess amine, and then optionally reacted with a fatty acid or aliphatic monoepoxide.

The water soluble or water miscible polyols, used to optionally chain extend epoxy resins, include organic polyols containing at least one and preferably two alcohol primary hydroxyls. Mixtures of organic polyols may be used in the practice of this invention, as well as mixtures of organic polyols and primary mono primary alcohols. These organic polyols will have a molecular weight of 200 to 3 000, more typically 300 to 1 000, and preferably 400 to 700.

Water miscible is defined as the ability or tendency of the polyol to mix or blend uniformly with water. By water soluble is meant the ability or tendency of the polyol to blend uniformly with water.

The organic polyols which are used in the practice of this invention are those known in the art, e. g. polyols disclosed in US-A-4 104 147 which is incorporated by reference.

The water soluble or water miscible polyols which are used to generate the modified epoxy resins of this invention include the aliphatic polyols, the aromatic polyols, alkylene polyols, butadiene polyols, and butadiene acrylonitrile polyols.

Specific examples of the organic polyols used in the practice of this invention include Tone 200 brand polyol manufactured by Union Carbide Corp., Carbowax PG 300 and Carbowax PG 400 polyols manufactured by Union Carbide Corp., SynFac 8007 and SynFac 8008 brand polyols manufactured by Milliken Chemical Co., Spartanburg, South Carolina, and Hycar HTBN brand polyol manufactured by B. F. Goodrich Chemical Corp., Cleveland, Ohio. A particularly preferred polyol is SynFac 8008 brand.

The modification of the polyepoxide, that is, the chain extension and corresponding increase of molecular weight, is accomplished by mixing the organic polyol with the polyepoxide in an organic solvent, such as toluene, methyl isobutyl ketone, xylene, etc., and reacting these products at a sufficient temperature for a sufficient amount of time in a conventional reactor in the presence of a catalyst to

completely react the polyepoxide. Typically, the reaction temperature will be 93 °C (200 °F) to 177 °C (350 °F), more typically 121 °C (250 °F) to 160 °C (320 °F), preferably 127 °C (260 °F) to 149 °C (300 °F).

Typically the reaction time is 120 minutes to 300 minutes, more typically 160 minutes to 260 minutes, preferably 180 minutes to 240 minutes.

Typically about 1.5 to about 3 epoxide equivalents of polyepoxide are reacted, more typically about 2 to about 2.5, preferably about 2 equivalents with one equivalent of polyol. Examples of suitable catalysts include benzyl dimethylamine, triethylamine, triphenol phosphine, boron trifluoride, dimethylcyclohexylamine, and dimethylethanolamine or any Lewis acid.

The polyamines used in the practice of this invention are typical of those known in the art such as the polyamines disclosed in US-A-4 139 510, which is incorporated by reference.

The polyamines which are reacted with the polyepoxide resins in this invention contain at least 2 amine nitrogen atoms per molecule, at least 3 amine hydrogen atoms per molecule and no other groups which are reactive with epoxide groups. These polyamines can be aliphatic, cycloaliphatic or aromatic and contain at least 2 carbon atoms per molecule. Useful polyamines contain 2 to 6 amine nitrogen atoms per molecule, 3 to 8 amine hydrogen atoms and 2 to 20 carbon atoms. Examples of such amines are the alkylene polyamines, ethylene diamine, 1,2-propylene diamine, 1,3-propylene diamine, 1,2-butylene diamine, 1,3-butylene diamine, 1,4-butylene diamine, 1,5-pentalene diamine, 1,6-hexylene diamine, o, m and p-phenylene diamine 4,4′-methylene dianiline, menthane diamine, 1,4-diaminocyclohexane, methylaminopropylamine, and the like. Preferred amines for use in this invention are alkylene polyamines of the formula :

$$H_2NR(\underset{\displaystyle H}{\underset{|}{N}}R)_n NH_2$$

wherein n is an integer of 0 to 4 and R is an alkylene group containing 2 to 4 carbon atoms. Examples of such alkylene polyamines are ethylene diamine, diethylene triamine, triethylene tetramine, tetraethylene pentamine, pentaethylene hexamine, dipropylene triamine, tributylene tetramine and the like. Mixtures of amines can also be used. The more preferred amines are the ethylene polyamines with the most preferred being triethylene tetramine, tetraethylene pentamine, and diethylene triamine.

Sufficient quantities of polyamine are reacted with sufficient quantities of modified polyepoxide resin so that the adduct formed contains about 1 mole of adducted polyamine molecule for each epoxide equivalent originally present in polyepoxide resin. The adducting reaction typically requires 1.5 to 15.0 moles of polyamine, i. e., an excess, for each epoxide equivalent of the polyepoxide resin, more typically 2.0 moles to 12.0 moles, and preferably 3.0 moles to 10.0 moles. Since excess polyamine is used, the excess unreacted polyamine must be removed by distillation after reaction to prevent gellation of the reaction product.

In preparing the modified epoxy-polyamine compositions sufficient quantities of polyamine are reacted with sufficient quantities of modified polyepoxide resin in a conventional reactor vessel for a sufficient period of time at a sufficient temperature to react all of the epoxide groups. Typically, the reaction temperature will be 24 °C (75 °F) to 104 °C (220 °F), more typically 26,7 °C (80 °F) to 88 °C (190 °F), and preferably 60 °C (140 °F) to 82 °C (180 °F). The reaction time is typically five minutes to 60 minutes, more typically ten minutes to 40 minutes, and preferably 25 minutes to 30 minutes. When the adducting reaction is complete, the unreacted or excess polyamine is removed by distillation with sufficient vacuum and at a sufficient temperature to remove the excess polyamine.

Typical distillation temperatures are 135 °C (275 °F) to 260 °C (500 °F), more typically 160 °C (320 °F) to 246 °C (475 °F) and preferably 219 °C (425 °F) to 232 °C (450 °F). Typical vacuum are 7 980 Pa (60 mmHg) to 10 108 Pa (76 mmHg), more typically 8 645 Pa (65 mmHg) to 10 108 Pa (76 mmHg) and preferably 9 842 Pa (74 mmHg) to 10 108 Pa 76 mmHg.

Fatty acids which can be used, to optionally modify the epoxy resins used in the practice of this invention, are monocarboxylic acids containing about 4 to 22 carbon atoms. The fatty acids may be saturated of unsaturated. The fatty acids are typical of those known in the art. Examples of such acids are caprylic acid, capric acid, stearic acid, benzoic acid, oleic acid, linoleic acid, linolenic acid and liconic acid. Such acids can be those derived from naturally occuring oils and which are named from the oil from which it is derived, e. g., linseed fatty acids, soya fatty-acids, cottonseed fatty acids, cocoanut fatty acid and the like. A particularly preferred fatty acid in pelargonic acid.

The monoepoxides which can be used to optionally modify the epoxy resins used in the practice of this invention contain one 1,2-epoxide group per molecule and about 6 to about 24 carbon atoms per molecule. The monoepoxides used in the practice of this invention are typical of those known in the art such as the monoepoxides disclosed in US-A-4,139,510 which is incorporated by reference.

Examples of monoepoxides are epoxidized hydrocarbons, epoxidized unsaturated fatty esters, monoglycidyl ethers of aliphatic alcohols and monoglycidyl esters of monocarboxylic acids. Examples of such monoepoxides are : epoxidized unsaturated hydrocarbons which contain 6 to 24 carbon atoms, e. g., octylene oxide ; decylene oxide, dodecylene oxide and nonadecylene oxide, epoxidized monoalcohol esters of unsaturated fatty acids wherein the fatty acids contain about 8 to 18 carbon atoms and the alcohol contains 1 to 6 carbon atoms, e. g., epoxidized methyl oleate, epoxidized n-butyl oleate,

epoxidized methyl palmitoleate, epoxidized ethyl linoleate and the like; monoglycidyl ethers of monohydric alcohols which contain 8 to 20 carbon atoms, e. g., octyl glycidyl ether, decyl glycidyl ether, dodecyl glycidyl ether, tetradecyl glycidyl ether, hexadecyl glycidyl ether and octadecyl glycidyl ether; monoglycidyl esters of monocarboxylic acids which contain 8 to 20 carbon atoms, e. g., the glycidyl ester of caprylic acid, the glycidyl ester of capric acid, the glycidyl ester of lauric acid, the glycidyl ester of stearic acid, the glycidyl ester of arachidic acid and the glycidyl esters of alpha, alpha-dialkyl monocarboxylic acids described in US-A-3,178,454 which is incorporated by reference. Examples of such glycidyl esters are those derived from 9 to 19 carbon atoms, particularly Versatic 911 Acid, a product of Shell Oil Company, which acid contains 9 to 11 carbon atoms.

The monoepoxides or fatty acids are optionally reacted with the modified epoxy-polyamine adducts of this invention to improve the electrical insulating properties of the deposited electrodepositable resin compositions of this invention. In addition, these components improve the properties of the deposited coating such as flexibility, corrosion resistance, and hardness.

Sufficient quantities of modified epoxy-polyamine adducts are mixed with sufficient quantities of fatty acid or monoepoxide in an organic solvent such as xylene, or toluene in a conventional reactor vessel for a sufficient period of time at a sufficient temperature to complete the reaction. Typically about one mole of modified epoxy-polyamine adduct is reacted with the following amounts of fatty acid or monoepoxide.

When fatty acid is the reactant, typically 0.5 moles to 2.75 moles of fatty acid are reacted with the adduct, more typically 1 mole to 2.25 moles, and preferably about 1 mole to about 2 moles. The reaction temperature is typically 149 °C (300 °F) to 204 °C (400 °F), more typically 163 °C (325 °F) to 199 °C (390 °F), and preferably 177 °C (350 °F) to 190 °C (375 °F); the reaction time is 60 minutes to 180 minutes, more typically 60 minutes to 140 minutes and preferably 120 minutes, or until the acid value is reduced to below about 6.

When monoepoxide is the reactant, typically 0.5 mole to 2.25 moles of monoepoxide are reacted with the adduct, more typically 1 mole to 2.25 moles, preferably 1 mole to 2 moles. The reaction temperature is typically 66 °C (150 °F) to 149 °C (300 °F), more typically 66 °C (150 °F) to 138 °c (280 °F), and preferably 66 °C (150 °F) to 121 °C (250 °F); reaction times are typically 60 minutes to 180 minutes, more typically 60 minutes to 150 minutes, and preferably 60 minutes to 100 minutes.

Sufficient quantities of the crosslinking agents of this invention are incorporated into the electrodepositable coating compositions of this invention such that the deposited coating will be completely cured upon baking and there will be no free isocyanate groups remaining. Typically, about 20 wt.% to about 80 wt.% of blocked polyisocyanate is incorporated based upon the total weight of amine containing-epoxide resin composition and crosslinking agent, more typically about 30 wt.% to about 70 wt.%, preferably about 35 wt.% to about 45 wt.%.

The crosslinking agents of this invention are mixed with the epoxy resin compositions, preferably the optionally modified epoxy-polyamine-fatty acid or epoxy-polyamine-monoepoxide reaction products, by adding the blocked polyisocyanates to a reactor containing the epoxy resin composition and mixing the charge for about one-half hour.

In order to solubilize an amine containing epoxy resin composition, it is necessary to salt the reaction product with a water soluble acid. The acids which can be used include those known in the art such as formic acid, acetic acid, phosphoric acid, lactic acid, hydrochloric acid, etc. Sufficient quantities of the acid are mixed with said amine-containing epoxy resin composition to solubilize or disperse the resin in water. One method in which the salting process is accomplished is by charging the amine-containing epoxy resin composition, an acid, cosolvents, water and surfactants conventional in the art into a reactor vessel, and mixing the reactor charge with a slow speed mixer until the reaction has been completed. In a preferred method, acid, water, etc. are initially added to a reactor vessel, then the resin is charged while the reactants are mixed with a slow speed mixer. Typically, the reaction temperature is about — 4 °C (25 °F) to 66 °C (150 °F), more typically 38 °C (100 °F) to 60 °C (140 °F), and preferably 49 °C (120 °F). The reaction will be typically run for 15 minutes to 90 minutes, more typically 25 minutes to 80 minutes, and preferably 60 minutes.

Typically, 0.1 Meq to 0.8 Meq to acid is used per gram of solid resin, more typically 0.2 Meq to 0.7 Meq, and preferably 0.2 Meq to 0.5 Meq.

The crosslinking agents are typically added to the salted aqueous resin dispersion.

Electrodepositable cathodic coating compositions containing the crosslinking agents of this invention are used in an electrodeposition process as an aqueous emulsion. Sufficient quantities of the emulsion are used so that the concentration of the resin composition in an aqueous bath will produce a coating on an article of sufficient thickness so that upon baking the coating will have the desired characteristics such as smooth surface, high build, short coating time and low temperature cures. Typically, the concentrations in an electrodeposition of the bath of the principal resin of this invention are 10 wt.% to 40 wt.%, more typically 10 wt.% to 30 wt.%, and preferably 15 wt.% to 25 wt.%.

It should be noted that the cathodic electrodepositable resins and crosslinking agents are typically shipped by the manufacturer to the user as a salted aqueous principal emulsion having a concentration of 20 wt.% to 36 wt.% of solids.

The cathodic electrodepositable coating baths of this invention are typically formed by mixing the

solubilized (i. e., salted) cathodic electrodepositable resin compositions of this invention in concentrate form with water, although dry resin could be used. The electrodeposition bath may contain additional ingredients such as pigment pastes, coalescent solvents, antioxidants, surfactants, etc., which are typically used in electrodeposition processes known in the art. Pigment compositions may be of any conventional type and are one or more of such pigments as the iron oxides, the lead oxides, strontium chromate, carbon black, titanium dioxide, talc, barium sulphite, barium yellow, cadmium red, chromic green, lead silicate, etc. Sufficient quantities of pigment are used to achieve the appearance characteristics desired such as gloss, reflectance, hue tint and other desired characteristics. Typically, the amount of pigment used is expressed in a ratio of total pigment to total binder. Typically a pigment to binder ratio of 0.1 to 0.4 is used in the electrodepositable resin compositions of the present invention, more typically 0.15 to 0.35, preferably 0.2 to 0.3. Pigment is typically added to the electrodeposition bath in paste form, i. e., predispersed in a composition comprising pigment, amine-containing epoxy resin, and surfactants.

Electrodeposition baths typically contain coalescent solvents which are water soluble or partially water soluble organic solvents for the resinous vehicles used in the practice of this invention. The coalescent solvents used in the practice of this invention are those typically used and known in the art.

Examples of such volatile organic coalescent solvents include monomethyl ether ethylene glycol, monoethyl ether ethylene glycol, monobutylether, diethylene glycol monobutylether, ethanol, isopropanol, n-butenol, etc. Sufficient amounts of coupling solvent are used so that a good emulsion resulting in a smooth deposited film is produced.

The use of the crosslinking agents of the present invention substantially reduces or completely eliminates the need for coalescent solvents. When coalescent solvents are used, the total amounts used in the coating bath will be typically less than about 0.5 wt.% (based on 20 to 25 wt.% solids for the bath), and preferably less than about 0.3 wt.%. The amounts of coalescent solvents present in a principal aqueous emulsion will typically be less than about 0.5 wt.% (based on 36 wt.% solids for the emulsion) and preferably less than 0.3 wt.%.

The electrodeposition process typically takes place in an electrically insulated tank containing an electrically conductive anode which is attached to a direct current source. The size of the tank will depend on the size of the article to be coated. Typically, the tank is constructed of stainless steel or mild steel lined with a dielectric coating such as epoxy impregnated fiberglass or polypropylene. The electrodepositable cathodic resinous coating compositions of this invention are typically used to coat articles such as automobile or truck bodies. The typical size of an electrodeposition bath tank used for this purpose is 228 000 (60,000 gallons) to 456 000 l (120,000 gallons).

Typically, the article to be coated is connected to the direct current circuit so that the conductive object acts as the cathode. When the article is immersed in the coating bath, flow of electrons from the cathode to the anode, that is, conventional current flow from the anode to the cathode, results in the particles of the dispersed cationic electrodepositable resin composition being deposited on the surfaces of the article. The particles of the dispersed resin composition are positively charged and are therefore attracted to the negative cathodic surface of the object to be coated. The thickness of coating deposited upon the object during its residence in the electric cathodic coating bath is a function of the cathodic electrodepositable resin composition, the voltage across the article, the current flux, the pH of the coating bath, the conductivity, the residence time, etc. Sufficient voltage will be applied to the coated article for a sufficient time to obtain a coating of sufficient thickness. Typically, the voltage applied across the coated article is 50 volts to 500 volts, more typically 200 to 350 volts, and preferably 225 volts to 300 volts. The current density is typically 0.08 $A/cm^2$ (0.5 ampere per sq. ft.) to 4.65 $A/cm^2$ (30 amperes per sq. ft.), more typically 0.15 $A/cm^2$ (one ampere per sq. ft.) to 3.8 $A/cm^2$ (25 amperes per sq. ft.), and preferably 0.15 $A/cm^2$ (one ampere per sq. ft.). The article to be coated typically remains in the coating bath for a sufficient period of time to produce a coating or film of sufficient thickness, having sufficient resistance to corrosion and flexibility. The residence time or holding time is typically 1 minute to 3 minutes, more typically 1 minute to 2-1/2 minutes, and preferably 2 minutes.

The pH of the coating bath is sufficient to produce a coating which will not rupture under the applied voltage. That is, sufficient pH to maintain the stability of the coating bath so that the resin does not kick-out of the dispersed state and to control the conductivity of the bath. Typically, the pH is 4 to 7 more typically 5 to 6.8, and preferably 6 to 6.5.

The conductivity of the coating bath will be sufficient to produce a coated film of sufficient thickness. Typically the conductivity will be 800 micro mhos to 3,000 micro mhos, more typically 800 micro mhos to 2,200 micro mhos, and preferably 900 micro mhos to 1,800 micro mhos.

The desirable coating thicknesses are sufficient to provide resistance to corrosion while having adequate flexibility. Typically, the film thicknesses of the coated objects of this invention will be 10.1 μm (0.4 mil) to 45.7 μm (1.8 mils), more typically 15.2 μm (0.6 mil) to 40.6 μm (1.6 mils), and preferably 30.48 μm (1.2 mils) to 35.5 μm (1.4 mils). The term « high film build » is defined to mean a film thickness greater than 25.4 μm (1.0 mils).

The temperature of the coating bath is preferably maintained through cooling at a temperature less than 30 °C (86 °F).

When the desired thickness of the coating has been achieved the coated object is removed from the electrodeposition bath and cured. Typically, the electrodeposited coatings are cured in a conventional

convection oven at a sufficient temperature for a sufficient length of time to unblock the blocked crosslinking agents and allow for crosslinking of the electrodepositable resin compositions. Typically, the coated articles will be baked at a temperature of 93 °C (200 °F) to 316 °C (600 °F), more typically 121 °C (250 °F) to 190 °C (375 °F), and preferably 146 °C (295 °F) to 163 °C (325 °F). The coated articles will be baked for a time period of 10 minutes to 40 minutes, more typically ten minutes to 35 minutes, and preferably 15 minutes to 30 minutes.

It is contemplated that the coated articles of the present invention may also be cured by using radiation, vapor curing, contact with heat transfer fluids ; and equivalent methods.

The smoothness of the cured coating is a function of the « flow » of the deposited coating composition. Flow is defined as the tendency of the electrodeposited coating composition to liquify during the curing operation and form a smooth cohesive film over the surface of a coated article prior to the onset crossling. Flow is related to the plasticizing effect of coalescent solvents.

Typically the coated articles of this invention will comprise conductive substrates such as metal, including steel, aluminum, copper, etc., however, any conductive substrate having a conductivity similar to the aforementioned metals may be used. The articles to be coated may comprise any shape so long as all surfaces can be wetted by the electrodeposition bath. The characteristics of the article to be coated which have an effect on the coating include the shape of the article, the capacity of the surfaces to be wetted by the coating solution, and the degree of shielding from the anode. Shielding is defined as the degree of interference with the electromotive field produced between the cathode and the anode, thereby preventing the coating composition from being deposited in those shielded areas. A measure of the ability of the coating bath to coat remote areas of the object is throwpower. Throwpower is a function of the electrical configuration of the anode and cathode as well as the conductivity of the electrodeposition bath.

The coatings of the coated articles of this invention exhibit smoothness, gloss, flexibility, high film build, durability, and resistance to corrosion. Smoothness and gloss are related to the flow of the electrodeposited cathodic resin. Durability, high film build flexibility and resistance to corrosion are related to the chemical nature of the electrodeposited cathodic resin as well as the smoothness of the deposited coating. These coating compositions readily accept an automotive primer overcoat.

It should be noted that the articles which are coated by the coating compositions of this invention are typically automobile bodies which have been pretreated to remove impurities and contaminants in a phosphatizing bath.

The following examples are illustrative of the principles and practice of this invention, although not limited thereto. Parts and percentage were used are parts and percentages by weight.

## Example 1A

The crosslinker was prepared by slowly charging 712 parts of polyol TP30''' (trimethylolpropane-triethoxylate, manufactured by Perstorp, Sweden) into a suitable reactor vessel containing 1 392 parts of a 80/20 isomer mixture of 2,4-/2,6-toluene diisocyanate and 300 parts of methyl isobutyl ketone under agitation with a nitrogen blanket. The reaction was maintained at a temperature below 43 °C (110 °F). The charge was held an additional one and one-half hour at 43 °C (110 °F), and then heated to 60 °C (140 °F), at which time 832 parts of ethylene glycol monopropyl ether were added. The charge was maintained at 99 °C (210 °F) to 104 °C (220 °F) for one and one-half hours until essentially all of the isocyanate moiety was consumed as indicated by infrared scan. The batch was then thinned with 832 parts of methyl isobutyl ketone and 126 parts of butanol.

## Example 1B

The following components were charged into a suitable reactor vessel : 1 658 parts of Epon 828 having an epoxy equivalent weight of 188 ; 473 parts of Bisphenol A ; 583 parts of ethoxylated Bisphenol A having a hydroxy equivalent weight of 230 (Synfac 8 009 from Milliken Chemical Co.) ; and 147 parts of toluene.

The charge was heated to 63 °C (145 °F) under a dry nitrogen blanket and 3.8 parts of benzyl dimethyl amine were added to the reactor vessel. The reaction mixture was further heated 71 °C (160 °F), and held for 45 minutes, and an additional 5.4 parts of benzyl dimethyl amine were added, and the mixture was held at 150 °C until the desired WPE was achieved, then 1 037 parts of toluene were added to the reactor to dilute the resulting adduct B.

## Example 1C

A conventional reactor equiped with an agitator, thermometer, nitrogen line and a condensor was charged with 730 parts of triethylene tetramine. The triethylene tetramine was slowly heated to 60 °C (140 °F). Then, 1 846 parts of the adduct B were slowly added to the reactor during a one-hour time period. After the adduct B was completely charged, the mixture was heated to 82 °C (180 °F) and held for one hour. Next, the excess amine in the reactor mixture was vacuum distilled, condensed and removed by

applying a vacuum of 9 975 Pa (75 mmHg) and slowly raising the temperature of the reactor charge to 255 °C (550 °F) over a 2.5 hour time period. The mixture was held at this temperature until no more distillate was coming out. The temperature was then lowered to 182 °C (360 °F) and 158 parts of Pelargonic acid along with 50 parts of xylene were added to the reactor. The resulting mixture was heated to 182 °C (360 °F) and held at reflux until the acid value was down to 6. Then the reaction mixture was cooled down to ambient temperature and reduced to 56 % NV with methyl isobutyl ketone.

Example 1D

An acrylic anti-cratering agent was prepared by charging 44 parts of butyl acrylic, 15 parts of hydroxyethyl acrylic, 15 parts of dimethylaminoethyl methacrylic, 2 parts of styrene, 1 part of octyl mercaptan, 4 parts of VAZO 67 and 3 parts of acetone to a refluxing mixture of 13 parts of methyl isobutyl ketone and 2 parts of acetone over a four-hour period. After a 15 minute holding period, 0.14 parts of VAZO 67 and one part of methyl isobutyl ketone were added. The batch was maintained at the refluxing temperature for another hour.

Example 1E

The principal emulsion was prepared by adding to a conventional react equipped with a reflux condensor and agitation, 702 parts of the adduct of Example C, 391 parts of the crosslinker of Example A, 21 parts of the anti-cratering agent of Example D, to 774 parts of deionized water and 12 parts of acetic acid under high agitation. After agitation for 3 days, all organic solvents were driven off.

Example 1F

The adduct F and the adduct G are the two intermediates for the grinding vehicle. The adduct F was prepared by charging ethylene glycol monopropyl ether to 2,4-toluene diisocyanate under agitation with a dry nitrogen blanket. The reaction was maintained at a temperature below 38 °C (100 °F). The charge was held and additional one and one-half hours.

Example 1G

To 455 parts of Triton X-102'" (an alkylaryl polyether alcohol manufactured by Rohm and Haas, Philadelphia, PA) and 51 parts of methyl isobutyl ketone previously azetroped to remove water, 109 parts of 2,4 toluene diisocyanate were added. The reaction was maintained at 46 °C (115 °F) for two hours. To this product, 56 parts of dimethyl ethanolamine were charged, and the reaction was maintained at 71 °C (160 °F) for one hour. Finally, 50 parts of ethylene glycol monobutyl ether, 75 parts of lactic acid, and 89 parts of deionized water were added. The reaction was held at 88 °C (190 °F) for one hour.

Example 1H

The grinding vehicle was prepared by charging 88 parts of the adduct F to a reaction vessel containing 206 parts of EPON 1 002 F (WPE = 650 manufactured by Shell Chemical Co., Houston, TX) and 39 parts of isobutyl methyl ketone. The reaction temperature was maintained at 121 °C (250 °F) for one hour. Ethylene glycol monobutyl ether, 186 parts, and the adduct of Example G, 381 parts, were then added to the reactor. The batch was maintained at 82 °C (180 °F) for four hours.

Example 1I

A pigment paste was prepared by grinding 203 parts of the grinding vehicle of Example 1H, 17 parts of ethylene glycol monobutyl ether, 274 pats of deionized water, 67 parts of aluminium silicate, 317 parts of $TiO_2$, 30 parts of lead silicate, 6 parts of carbon black, and 19 parts of dibutyl tin oxide in a steel ball mill for approximately 24 hours until the maximum particle size was reduced to about 12 µm. Then, 66 parts of additional deionized water was added.

Example 1J

A dispersion suitable for electrodeposition composed of 1 786 parts of the principal emulsion of Example 1E, 1 084 parts of deionized water, and 330 parts of the pigment paste of Example 1I was prepared by mixing to form a bath. The dispersion had a pH of 6 and a total solid of 25 %. All organic solvent was driven off from the bath after agitation for 5 weeks. A phosphated steel panel electrocoated at 300 volts for two minutes gave a smooth film of 30.5 µm (1.2 mil) thickness after a 149 °C (300 °F) bake for 25 minutes.

Example 2A

A principal emulsion was prepared as follows. The following components were charged into a suitable reactor vessel : 702 parts of EPON 828, 243 parts of ethoxylated bisphenol A (Synfac 8 009 from Milliken Chemical Co.), and 60 parts of xylene. The mixture was heated to 200 °C-215 °C to remove any water present. The mixture was cooled to 150 °C, and 198 parts of bisphenol A and 1.6 parts of benzyldimethyl amine were added. The mixture was heated to 150 °C and held between 150 °C and 190 °C for about one-half hour and then cooled to 130 °C. Benzyldimethyl amine, 2.2 parts, was added and the reaction mixture was held at 130 °C for about two and one-half hours until a reduced Gardner-Holdt viscosity (50 % resin solution in 2-ethoxyethanol) of N-O was obtained. Next, 1 121 parts of the polyurethane crosslinker of Example 1A, 73 parts of DETA diketimine (73 % solids in methyl isobutyl ketone), and 65 parts of methyl ethanol amine were added, and the mixture was held at 110 °C for one hour. The mixture was dispersed in 3 149 parts of deionized water and 68 parts of lactic acid. The solvent was removed by vacuum distillation. The solids content of the solvent stripped dispersion was about 36 %.

Example 2B

A dispersion suitable for electrodeposition composed of 1 786 parts of the principal emulsion of Example 2A, 1 084 parts of deionized water, and 330 parts of the pigment paste of Example 1I. The dispersion had a pH of 6.2 and a total solids content of 25 %. All organic solvent was driven off from the bath after agitation for 5 weeks. A phosphated steel panel electrocoated at 300 volts for two minutes gave a smooth film of 30.5 μm (1.2 mil) thickness after a 163 °C (325 °F) bake for 25 minutes.

The use of the crosslinking agents of the present invention surprisingly and unexpectedly substantially reduces or completely eliminates the need for coalescent solvents in electrodeposition coating baths while producing smooth, flexible, high build coatings.

Although this invention has been shown and described with respect to the detailed embodiments thereof, it will be understood by those skilled in the art that various changes in form and detail thereof may be made without departing from the scope of the claimed invention.

**Claims**

1. A method of coating articles with a film-forming resin using a cathodic electrodeposition process wherein a cathodic electrodepositable amine-containing epoxide resin is mixed with a crosslinking agent, the resin is then salted with acid to form an aqueous emulsion, the aqueous emulsion is mixed with a pigment paste and water to form an aqueous electrocoat coating bath, the bath is contained in an electrically insulated tank containing an anode, a conductive article is electrically connected to a direct current circuit to act as a cathode, the article is then immersed in the bath and a direct electric current is passed across the article resulting in the deposition of the film of the resin and crosslinking agent and pigment paste, then the article is removed from the bath and the coating is cured, said crosslinking agent comprising the reaction product of polyetherpolyol, a polyisocyanate, and a blocking agent characterized in that the polyisocyanate is selected from the group consisting of toluene diisocyanate, 4,4′-diphenylmethane diisocyanate, hexamethylene diisocyanate and isophorone diisocyanate and the blocking agent is selected from the group consisting of monoalcohols, oximes and caprolactam and characterized in that before carrying out the cathodic electrodeposition step the coating bath is agitated for a sufficient amount of time until the organic solvent is driven off from the aqueous coating bath.

2. The method of claim 1 characterized in that the polyetherpolyol is an alkylene oxide condensate of a polyol.

**Patentansprüche**

1. Verfahren zum Überziehen von Gegenständen mit einem filmbildenden Harz unter Verwendung eines katodischen Elektrotauchauftragverfahrens, wobei ein katodisches, elektrotauchauftragbares, aminhaltiges Epoxidharz mit einem Vernetzungsmittel vermischt wird, das Harz dann mit Säure gesalzt wird, um eine wässerige Emulsion zu bilden, die wässerige Emulsion mit einer Pigmentpaste und Wasser vermischt wird, um ein wässeriges Elco-Überzugsbad zu bilden, das Bad in einem elektrisch isolierten Tank aufgenommen wird, der eine Anode enthält, ein leitfähiger Gegenstand mit einem Gleichstromkreis elektrisch verbunden wird, um als Katode zu dienen, der Gegenstand dann in das Bad eingetaucht und ein elektrischer Gleichstrom durch den Gegenstand geleitet wird, was in dem Auftragen des Films des Harzes und des Vernetzungsmittels und der Pigmentpaste resultiert, dann der Gegenstand aus dem Bad entnommen und der Überzug gehärtet wird, wobei das Vernetzungsmittel das Reaktionsprodukt von Polyetherpolyol, einem Polyisocyanat und einem Blockiermittel umfaßt, dadurch gekennzeichnet, daß das Polyisocyanat aus der Gruppe ausgewählt wird, die aus Toluoldiisocyanat, 4,4′-Diphenylmethandiiso-

cyanat, Hexamethylendiisocyanat und Isophorondiisocyanat besteht, und das Blockiermittel aus der Gruppe ausgewählt wird, die aus Monoalkoholen, Oximen und Caprolactam besteht, und dadurch gekennzeichnet, daß vor dem Ausführen des Schrittes des katodischen Elektrotauchauftragens das Überzugsbad für eine ausreichend lange Zeit aufgerührt wird, bis das organische Lösungsmittel aus dem wässerigen Überzugsbad ausgetrieben ist.

2. Verfahren nach Anspruch 1, dadurch gekennzeichnet, daß das Polyetherpolyol ein Alkenoxidkondensat eines Polyols ist.

## Revendications

1. Procédé de revêtement d'articles avec une résine filmogène, ce procédé faisant appel à un processus de dépôt par électrolyse cathodique, ce processus comprenant les étapes consistant à mélanger une résine époxy contenant une amine et étant apte à la déposition électrolytique cathodique, avec un agent de réticulation, saler ensuite la résine avec un acide pour obtenir une émulsion aqueuse, mélanger l'émulsion aqueuse avec un pigment en forme de pâte et de l'eau, pour obtenir un électrolyte aqueux de revêtement par électrolaquage, cet électrolyte étant contenu dans une cuve à isolation électrique et contenant une anode, brancher électriquement un article conducteur à un circuit de courant continu, cet article conducteur faisant office de cathode, plonger ensuite l'article dans l'électrolyte et faire passer un courant électrique continu au travers de l'article, ce qui provoque le dépôt de la pellicule de la résine, de l'agent de réticulation et du pigment sous forme de pâte, retirer ensuite l'article de l'électrolyte et durcir le revêtement, l'agent de réticulation comprenant le produit réactionnel de polyéther-polyol, un polyisocyanate, ainsi qu'un agent de blocage, caractérisé en ce que le polyisocyanate est choisi parmi le groupe comprenant le toluène-diisocyanate, le 4,4'-diphényl-méthane-diisocyanate, l'hexaméthylène-diisocyanate de l'isophorone-diisocyanate tandis que l'agent de blocage est choisi parmi le groupe comprenant les mono-alcools, les oximes et le caprolactame, et caractérisé en ce qu'avant de passer à l'étape de dépôt par électrolyse cathodique, on agite l'électrolyte de revêtement au cours d'une période suffisante pour que le solvant organique soit chassé de l'électrolyte aqueux de revêtement.

2. Procédé selon la revendication 1, caractérisé en ce que le polyéther-polyol est un condensat d'oxyde d'alkylène d'un polyol.